# EUROPÄISCHE PATENTANMELDUNG

(11) **EP 3 412 184 A1**
(43) Veröffentlichungstag der Anmeldung: **12.12.2018**
(21) Anmeldenummer: 17174831.2
(22) Anmeldetag: 07.06.2017
(51) Int. Cl.: A47J 31/60, C02F 1/68

(54) **VERFAHREN UND VORRICHTUNG ZUM BETREIBEN EINER KAFFEEMASCHINE UND/ODER TEEMASCHINE MIT VOLLENTHÄRTETEM WASSER**

(71) Anmelder: ICon GmbH & Co. KG, 75181 Pforzheim (DE)
(72) Erfinder: Bissen, Monique, 75181 Pforzheim (DE)
(74) Vertreter: Wittmann, Günther

(57) **Zusammenfassung**

Die Erfindung betrifft ein Verfahren und eine Vorrichtung zur Verhinderung der Verblockung der Brühgruppe, des Siebträgers oder des Kaffeefilters (8) in Kaffeemaschinen beim Einsatz von vollenthärtetem Wasser zur Zubereitung von Kaffee. Erfindungsgemäß wird vorgeschlagen, die Verblockung der Maschine zu vermeiden, indem ins vollenthärtete Wasser Calcium- und Magnesium-Ionen dosiert werden. Dies wird erfindungsgemäß dadurch gelöst, dass eine Vorrichtung mit einem Beutel oder Vorratsbehälter (4), welcher die Calcium- und Magnesium-Ionenhaltige Lösung enthält, in einer Kartusche (3) angeordnet wird, die in den Wassertank der Kaffeemaschine montiert wird. Der Beutel ist über eine Kapillare (5), die mit einem Rückschlagventil (6) verschlossen wird, mit dem vollenthärteten Wasser in Kontakt.

## Beschreibung

Die Erfindung betrifft ein Verfahren und eine Vorrichtung zur Verhinderung der Verblockung einer Kaffeemaschine bei der Zubereitung von Kaffee mit vollenthärtetem Wasser und/oder einer Teemaschine bei der Zubereitung von Tee mit vollenthärtetem Wasser.

Wird bei der Zubereitung von Kaffee vollenthärtetes Wasser verwendet, dann kommt es zur Verblockung der Kaffeebrühgruppe, des Siebträgers oder des Kaffeefilters in Kaffeemaschinen. Die Verblockung wird verursacht durch Feinstabrieb, welcher beim Zerreißen der Kaffeestruktur gebildet wird. Die Zerstörung der Kaffeestruktur wird verursacht durch die Natrium-Ionen, welche im vollenthärteten Wasser enthalten sind. Die Natrium-Ionen reagieren mit den funktionellen Gruppen des Kaffees und führen zum Quellen des Kaffeepulvers und dem Zerreißen der Kaffeestruktur. Das Zerreißen der Kaffeestruktur verursacht Feinstabrieb, der die feinporigen Abläufe der Brühgruppe, der Siebträgers oder der Kaffeefilter verstopft. Da das Wasser durch die Verstopfung der feinporigen Abläufe nicht aus dem Kaffeepulver verdrängt werden kann, ist der extrahierte Rückstand kein trockener Kaffeekuchen sondern schlammig.

Die Erfindung stellt sich zur Aufgabe eine Vorrichtung und ein Verfahren zum Betreiben einer Kaffeemaschine und/oder Teemaschine mit vollenthärtetem Wasser zu schaffen.

Die Aufgabe der Erfindung wird durch einen Lösungsbehälter nach Anspruch 1, einem Verfahren nach Anspruch 8, einer Kaffeemaschine und/oder Teemaschine nach Anspruch 17 und einer Verwendung nach Anspruch 18 gelöst. Die abhängigen Ansprüche beanspruchen bevorzugte Ausführungsformen.

Ein erfindungsgemäßer Lösungsbehälter ist dazu ausgebildet, in einem Wasserbehälter eines Haushaltsgerätes oder in einer Zuleitung zu dem Haushaltsgerät angeordnet zu werden. Der Wasserbehälter kann eine Kaffeemaschine und/oder eine Teemaschine sein. Der Lösungsbehälter umfasst eine Hülle, eine wässrige Lösung und eine Dosiereinrichtung. Die wässrige Lösung ist in der Hülle angeordnet und weist Erdalkali-Ionen auf. Die Dosiereinrichtung ist dazu ausgebildet, die wässrigen Lösung in der Hülle und dem Wasser im Wasserbehälter gesteuert zuzuführen. Die Dosiereinrichtung kann eine aktive Dosiereinrichtung, beispielsweise ein aktives Ventil oder eine Pumpe, oder eine passive Dosiereinrichtung sein.

Die Dosiereinrichtung kann eine Kapillare sein, die dazu ausgebildet, mit der wässrigen Lösung in der Hülle und dem Wasser im Wasserbehälter in Fluidverbindung zu stehen

Die Erdalkali-Ionen können Calcium-Ionen und/oder Magnesium-Ionen sein.

Sobald eine Pumpe des Haushaltsgerätes Wasser ansaugt, ergibt sich im Wasserbehälter ein Unterdruck. Die Kapillare steuert die Menge an Calcium-Ionen und Magnesium-Ionen, die dem Wasser im Wasserbehälter zugeführt werden. Dadurch ist es möglich, eine deterministische Menge an Calcium-Ionen und/oder Magnesium-Ionen dem Wasser im Wasserbehälter zuzuführen. Das Wasser in dem Wasserbehälter ist voll-enthärtetes Wasser. Durch die Zugabe von Calcium-Ionen und/oder Magnesium-Ionen wird die Funktionsfähigkeit des Haushaltsgerätes insbesondere der Kaffeemaschine und/ oder der Teemaschine verbessert. Ferner wird der Geschmack des Kaffees beziehungsweise des Tees 'verbessert.

Bei einer Ausführungsform ist die Hülle dazu ausgebildet, das von der Hülle umfasste Volumen zu verändern. Die Menge an der wässrigen Lösung in der Hülle ändert sich, wenn die Kapillare die wässrige Lösung an den Wasserbehälter abgibt. Dadurch, dass die Hülle ihr Volumen verändert, bildet sich in der Hülle kein Unterdruck, wenn das Volumen der wässrigen Lösung abnimmt. Folglich muss keine Entlüftungsöffnung vorgesehen werden. Dadurch eignet sich der erfindungsgemäße Lösungsbeutel dafür, dass er in einem Wasserbehälter angeordnet werden kann.

Bei einer Ausführungsform kann die Hülle ein flexibles Material aufweisen. Die Hülle kann sich mit dem abnehmenden Volumen der wässrigen Lösung zusammenziehen. Folglich ist keine Luftzufuhröffnung in der Hülle erforderlich.

Bei einer Ausführungsform kann die Hülle ihre Form und ihr Volumen aufgrund der Druckdifferenz zwischen dem Inneren und dem Äußeren des Lösungsmittelbehälters verändern. Beispielsweise kann die Hülle faltbar sein. Auch diese Ausführungsform stellt sicher, dass keine Entlüftungsöffnung erforderlich ist und die Hülle vollständig vom Wasser im Behälter umschlossen sein kann.

Bei einer Ausführungsform kann der Lösungsbehälter ein Ventil aufweisen, das in Fluidverbindung mit der wässrigen Lösung in der Hülle angeordnet ist und das dazu ausgebildet ist, die wässrige Lösung in das Wasser im Wasserbehälter abzugeben und das Eintreten von Wasser aus dem Wasserbehälter in die Hülle zu verhindern. Dadurch kann die Konzentration der Calcium-Ionen und der Magnesium-Ionen in der wässrigen Lösung in einem deterministischen Wertbereich gehalten werden.

Die Erfindung wird auch durch ein Verfahren zum Zuführen von Wasser zu einer Kaffeemaschine und/oder einer Teemaschine gelöst, das den Schritt des Zuführen von vollenthärtetem Wasser von einer Enthärtungseinrichtung in Richtung der Kaffeemaschine und/oder der Teemaschine und den Schritt des Brühens des zugeführten Wassers in der Kaffeemaschine und/oder Teemaschine aufweist. Erfindungsgemäß werden Erdalkali-Ionien dem vollenthärteten Wasser vor dem Schritt des Brühens des zugeführten Wassers zugeführt.

Bei einer Ausführungsform umfasst der Schritt des Zuführens von Erdalkali-Ionien ein Dosieren der Erdalkali-Ionien so, dass das zugeführte Wasser eine Härte in einem Bereich von etwa 4°d bis etwa 8°d, vorzugsweise von etwa 2°d bis etwa 14°d, aufweist. In diesem Härtebereichen kann eine Funktionsfähigkeit der Kaffeemaschine und/oder der Teemaschine sichergestellt werden und ein angenehmer Geschmack des gebrühten Kaffees bzw. Tees sichergestellt werden.

Bei einer Ausführungsform führt das Verfahren eine wässrige Lösung mit Erdalkalilonien dem zugeführten Wasser zu. Bei einer anderen Ausführungsform führt das Verfahren die Erdalkali-Ionien mittels eines Feststoffes zu. Bei noch einer anderen Ausführungsform führt das Verfahren die Erdalkali-Ionien mittels eines Salz zu.

Bei wieder einer anderen Ausführungsform weist der Schritt des Zuführens von Erdalkali-Ionien das Zuführen der Erdalkali-Ionien mittels einer Dosiereinrichtung, beispielsweise aktiv betätigten Ventilen, Mikropumpe oder dergleichen auf. Bei wieder einer anderen Ausführungsform können die Erdalkali-Ionien dem vollenthärtetem Wasser zugeführt werden, indem das vollenthärtete Wasser in einen Behälter geleitet wird, in dem sich Kalkstein befindet. Der Kalkstein kann sich in einem gemahlenen Zustand befinden, damit die Erdalkali-Ionien schneller von dem vollenthärtetem Wasser gelöst werden. Alternativ hierzu oder zusätzlich, kann das Wasser in einen Behälter geleitet werden, in dem sich Dolomit befindet. Das Dolomit kann gemahlen sein. Es ist möglich, dass sich in dem Behälter sowohl Kalkstein als auch Dolomit befindet.

Bei einer Ausführungsform werden die Erdalkali-Ionien mittels einer Kapillare zugeführt. Dadurch ist es möglich, mittels eines passiven Elementes reproduzierbar die Menge an Erdalkali-Ionien zu bestimmen, die dem vollenthärtetem Wasser zugeführt werden.

Bei einer Ausführungsform können die Erdalkali-Ionien dem vollenthärtetem Wasser in einer Kartusche zugeführt werden, die sich außerhalb der Kaffeemaschine und/oder der Teemaschine befindet. Bei einer anderen Ausführungsform können die Erdalkali-Ionien dem vollenthärtetem Wasser in einem Behälter zugeführt werden, der sich außerhalb der Kaffeemaschine und/oder der Teemaschine befindet. Bei noch einer anderen Ausführungsform können die Erdalkali-Ionien dem vollenthärtetem Wasser innerhalb der Kaffeemaschine und/oder innerhalb der Teemaschine zugeführt werden. Bei noch einer anderen Ausführungsform können die Erdalkali-Ionien dem vollenthärteten Wasser in einer Zuleitung der Kaffeemaschine und/oder der Teemaschine zugeführt werden.

Bei einer Ausführungsform weist das Verfahren den Schritt des Anordnens des zuvor beschriebenen Lösungsbeutels in einen Fluidbehälter in der Kaffeemaschine und/oder der Teemaschine und/oder den Schritt des Anordnens des zuvor beschriebenen Lösungsbeutels in einen Behälter, der mit einer Zuleitung zu der Kaffeemaschine und/oder der Zuleitung der Teemaschine gekoppelt ist, auf.

Das Verfahren weist ferner den Schritt des Erzeugens eines Unterdruckes in zumindest einem Bauteil der Kaffeemaschine und/oder der Teemaschine und/oder einer Zuleitung zu der Kaffeemaschine und/oder der Teemaschine auf, wobei der Unterdruck eine Entnahme der wässrigen Lösung durch die Kapillare aus dem Inneren der Hülle des Lösungsbehälters bewirkt.

Die Erdalkali-Ionen können Calcium-Ionen und/oder Magnesium-Ionen sein.

Die Erfindung betrifft auch eine Kaffeemaschine und/oder eine Teemaschine mit dem zuvor beschriebenen Lösungsbehälter.

Die Erfindung betrifft ferner eine Verwendung des zuvor beschriebenen Lösungsbehälters zum Zuführen von Erdalkali-Ionien zu Wasser, das einer Brüheinrichtung einer Kaffeemaschine und/oder einer Teemaschine zugeführt wird.

Das Wasser wird bei der Zubereitung von Kaffee in der Maschine erhitzt und der Kaffee mit heißem Wasser benetzt. Innerhalb von 1 bis 3 Sekunden quillt der Kaffee. Das Wasser wird durch das angefeuchtete Kaffeemehl gepresst. Der Wasserdruck wird langsam auf Werte zwischen 9 und 16 bar erhöht. Dabei werden die Aroma- und Geschmacksstoffe aus dem Kaffeemehl extrahiert. Der Extraktionsprozess sollte maximal 20 bis 25 Sekunden betragen, da andernfalls Bitterstoffe aus dem Kaffeemehl extrahiert werden. Nach einer gelungenen Extraktion ist das zurückbleibende Kaffeemehl, der sogenannte Kaffeekuchen trocken.

Durch die Verwendung von heißem Wasser, besteht die Gefahr, dass die Kaffeemaschinen durch die Anwesenheit von Härtebildern im Wasser verkalken und das System aufgrund von Kalkablagerungen verblocken. Zur Lösung des Verkalkungsproblems werden in der Praxis verschiedene Verfahren eingesetzt. Eine Möglichkeit besteht darin, die Kalkbeläge in der Maschine durch den regelmäßigen Einsatz von Säuren zu entfernen. Eine weitere Möglichkeit ist der Einsatz von Ionenaustauschern, die die Härtebildner Calcium und Magnesium aus dem Wasser entfernen. Die Ionenaustauscher werden dabei entweder zentral im Gebäudeeingang eingebaut oder das Wasser wird direkt an der Zapfstelle, dem sogenannten Point-of-Use (PoU) aufbereitet.

Am Hauseingang kommen zentrale Enthärtungsanlagen zum Einsatz, die einen stark sauren Kationenaustauscher enthalten. Im Enthärter werden sowohl die temporäre Härte, d.h. Calcium- und Magnesium-Ionen, welche an Bicarbonat gebunden sind, entfernt als auch die permanente Härte, d.h. Calcium- und Magnesium-Ionen, welche an die Anionen starker Säuren, wie z.B. Sulfat, Chlorid, Nitrat gebunden sind. Das Wasser wird dabei entweder teil- oder vollenthärtet. Bei der Vollenthärtung wird der gesamte Volumenstrom des zuströmenden Wassers über den Ionenaustauscher geleitet und die Calcium- und Magnesium-Ionen werden vollständig aus dem Wasser entfernt. Bei der Teilenthärtung, wird nur ein Teilstrom des zufließenden Wassers vollenthärtet. Das restliche Wasser wird im Bypass am Enthärter vorbeigeleitet und nach dem Enthärter mit dem vollenthärten Wasser vermischt.

Bei der Aufbereitung des Wassers an der Zapfstelle (dem sogenannten PoU) werden Filter, welche mit einem schwach sauren Kationenaustauscher gefüllt sind, eingesetzt. Die Filter werden in den Wasserzulauf der Maschinen, die über einen Festwasseranschluss verfügen, direkt in den Wassertank von Heißgetränkebereitern oder in sogenannte offene Systeme eingebaut, bei welchen das Wasser in Kannen aufbereitet wird. Die schwach sauren Kationenaustauscher werden in ungepufferter Form, d.h. in Wasserstoff-Form (H+-Form) eingesetzt oder mit Natrium- oder Kalium-Ionen gepuffert. Es wird nur die temporäre Härte aus dem Wasser entfernt. Das Wasser wird teilenthärtet bzw. entcarbonisiert. Calcium- und Magnesium-Ionen, welche an Bicarbonat gebunden sind, werden gegen Natrium- oder Kalium-Ionen und Wasserstoff-Ionen ausgetauscht. Dabei kommt es durch die Reaktion von Bicarbonat-Ionen mit Wasserstoff-Ionen zur Bildung von Kohlensäure und infolgedessen zu einem pH-Wertabfall im Wasser von Werten über pH 7 auf Werte von pH 4.5 bis 6.0.

Durch die Enthärtung und Entcarbonisierung kommt es zu einer Änderung der Inhaltsstoffe im Wasser. Aufgrund dessen kommt es zu anderen Reaktionen des Wassers mit den Kaffeeinhaltsstoffen bzw. -Verbindungen und damit zur Veränderung des Kaffeeextraktionsprozesses und des Kaffeegeschmacks. Der reduzierte Gehalt an Bicarbonat (Alkalinität) in entcarbonisiertem Wasser, kann beispielsweise dazu führen, dass weniger extrahierte Kaffeesäuren neutralisiert werden, so dass der Kaffee saurer schmeckt. Der saure pH-Wert von entcarbonisiertem Wasser lässt den Geschmack von Kaffee zusätzlich stärker sauer erscheinen, da der Säuregehalt des Getränkes steigt.

Beim Einsatz von vollenthärtetem Wasser, bei welchem die Härtebildner Calcium- und Magnesium-Ionen vollständig durch Natrium-Ionen ersetzt wurden, wird der Kaffeegeschmack durch das Fehlen von Calcium- und Magnesium-Ionen negativ beeinträchtigt. Dies liegt daran, dass die Reaktion von Natrium-Ionen mit den Kaffeeinhaltsstoffen eine andere ist als die Reaktion von Calcium- und Magnesium-Ionen mit den Kaffeeinhaltsstoffen. Infolgedessen verändern sich die chemischen und physikalischen Parameter während des Extraktionsprozesses und damit kommt es zu einer negativen Veränderung bei der Freisetzung von Aroma- und Geschmacksstoffen.

Darüber hinaus zeigt sich in der Praxis, dass beim Einsatz von vollenthärtetem Wasser in Kaffeemaschinen, die Struktur des Kaffees stark zerstört wird bzw. die Kaffeemehlbestandteile mechanisch zerrissen werden. Dabei entsteht Feinstabrieb, der die feinporigen Abläufe der Brühgruppe, der Siebträger und der eingesetzten Kaffeefilter verstopft. Das Phänomen wird verursacht durch die im Wasser vorhandenen Natrium-Ionen. In der Praxis zeigt sich, dass der Effekt bei feiner gemahlenem Kaffee aufgrund der größeren Partikelanzahl und der höheren Oberfläche stärker in Erscheinung tritt.

Die Verstopfung der Brühgruppe, der Siebträger und der eingesetzten Filter in Kaffeekapseln führt dazu, dass die Pumpe, die das Wasser durch das Kaffeemehl presst bzw. fördert aufgrund des hohen Druckverlustes in der Kaffeezubereitungskammer auf Störung geht. In anderen Fällen wird in der Maschinensteuerung eine maximale Extraktionszeit für ein definiertes Kaffeevolumen vorgegeben und die Maschine zeigt eine Störung an, da das Kaffeevolumen in der vorgegeben Zeit nicht erreicht wird.

Ausgehend davon liegt der vorliegenden Erfindung die Aufgabe zugrunde, ein Verfahren und eine Vorrichtung zur Wasseraufbereitung bereitzustellen, bei welchem die zuvor beschriebenen Nachteile der Verstopfung der Brühgruppe, der Siebträger und der eingesetzten Kaffeefiltern in Kaffeemaschinen, die vollenthärtetes Wasser zur Kaffeezubereitung verwenden nicht auftreten.

Überraschenderweise konnte festgestellt werden, dass es mit Hilfe der Zugabe von Wasserhärte, d.h. Calcium- und/oder Magnesium-Ionen zum vollenthärteten Wasser, möglich ist, die Verstopfung in der Kaffeemaschine zu vermeiden. Es konnte nachgewiesen werden, dass das Kaffeemehl durch die Zugabe von Calcium- und/oder Magnesium-Ionen zum vollenthärteten Wasser weniger stark zerstört wird und damit weniger Feinstabrieb gebildet wird. Die Natrium-Ionen werden beim Kontakt mit den hochmolekularen Kaffeeverbindungen an funktionelle Gruppen gebunden. Dies führt zu einer Veränderung der chemischen Struktur sowie der räumlichen Anordnung dieser Verbindungen. Durch diese Veränderung kommt es zu veränderten molekularen Kräften im Kaffeemehl, die zur makromolekularen Zerstörung des Kaffeemehls führen. Die Calcium- und Magnesium-Ionen werden ebenfalls von den funktionellen Gruppen im Kaffee gebunden, aber durch die zweiwertige Ladung dieser Verbindungen hat dies keinen zerstörenden Effekt auf die räumliche Struktur sowie die wirkenden Kräfte im Kaffeemehl. Überraschenderweise wurde festgestellt, dass die Calcium- und Magnesium-Ionen bevorzugt vom Kaffeemehl aufgenommen werden, so dass bei Anwesenheit von Calcium- und Magnesium-Ionen die Auswirkung von Natrium-Ionen auf die Kaffeestruktur abnimmt. Werden funktionelle Gruppen des Kaffees durch Calcium- und Magnesium-Ionen teilweise belegt, ist die Reaktion und Bindung von Natrium-Ionen an die Kaffeestruktur weniger ausgeprägt und die molekularen Kräfte, die zur Zerstörung der Kaffeestruktur auftreten, sind geringer.

Durch dieses erfindungsgemäße Verfahren wird das Verstopfen der Poren der Brühgruppe, der Siebträger und der Filter in Kaffeekapseln vermieden. Vorteil der vorliegenden Erfindung ist, dass bei Einsatz des Verfahrens in Kaffeemaschinen an der Einstellung des Enthärters, der am Wassereintritt des Hauses installiert ist und vollenthärtetes Wasser liefert, keine Veränderung vorgenommen werden muss. Das Wasserverteilsystem im Haus behält somit weiterhin vollen Kalkschutz.

### Kurze Beschreibung der Figuren

Die Erfindung wird nun unter Bezugnahme auf die beigefügte Figuren erläutert, wobei
Figur 1 eine Tabelle mit Versuchen zum Dosierung von Wasserhärte in vollenthärtetes Wasser zur Vermeidung der Verblockung der Kaffeemaschine (Störungsanzeige beim Kaffeezubereitungsprozess) zeigt; und

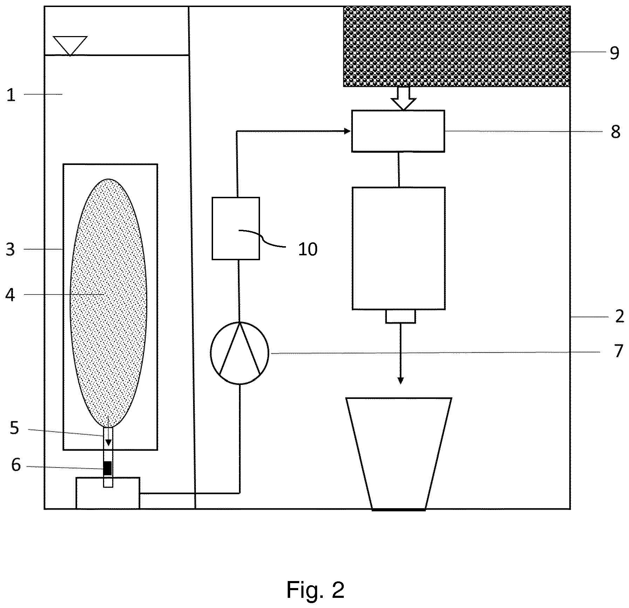

Figur 2 eine schematische Ansicht einer Kaffeemaschine mit dem Lösungsbehälter der Erfindung zeigt.

### Detaillierte Beschreibung der Figuren

Tabelle 1 zeigt das Verhalten einer Kaffeemaschine beim Einsatz verschiedener Wasserqualitäten. Die Tabelle enthält (a) Angaben zu Laufzeiten der Pumpe, die das Wasser durch den Kaffee drückt, (b) das resultierende Kaffeevolumen pro Bezug und (c) Angaben, ob die Maschine verblockt bzw. Störung anzeigt. Bei der Verwendung von Leitungswasser einer Gesamthärte zwischen 20°d und 40°d tritt keine Störung bei der Kaffeezubereitung auf. Es werden 200 ml Kaffee innerhalb von 30 Sekunden zubereitet. Wird dieses Leitungswasser vollenthärtet, kommt es bei Verwendung des gleichen Kaffees zur Verblockung der Maschine bei der Kaffeezubereitung und die Maschine zeigt eine Störung an.

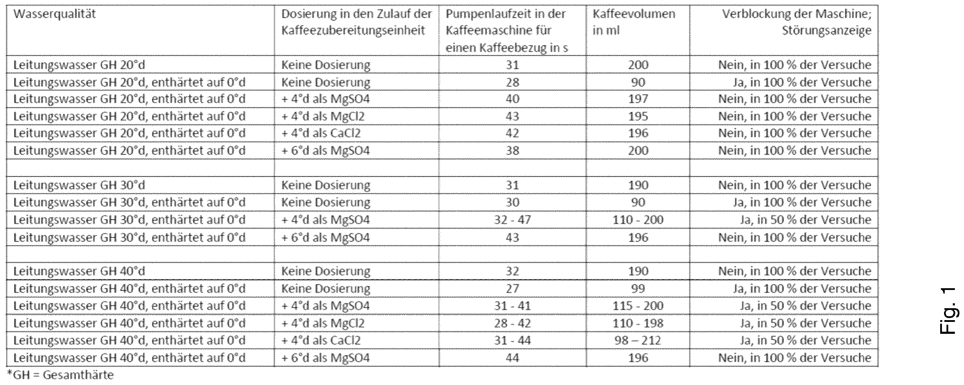

Es konnte nachgewiesen werden, dass ein solche Störung mit dem erfindungsgemäßen Verfahren und der Vorrichtung nicht mehr auftritt wenn dem vollenthärteten Wasser Calcium- und/oder Magnesium-Ionen also Wasserhärte hinzugefügt wird. Wird zur Kaffeezubereitung vollenthärtetes Leitungswasser, das eine Ausgangshärte von 20°d hatte eingesetzt, kann das Verblocken der Kaffeemaschine vermieden werden, indem dem Wasser 4°d Gesamthärte in Form von Magnesiumsulfat, Magnesiumchlorid oder Calciumchlorid hinzugefügt wird. Die Extraktionsdauer bzw. die Pumpenlaufzeit nimmt zwar im Vergleich zum Einsatz von nicht-enthärtetem Wasser um einige Sekunden zu, aber das resultierende Kaffeevolumen entspricht annährend dem Kaffeevolumen, welches beim Einsatz von nicht-enthärtetem Wasser erzielt wird. Die Maschine zeigte keine Störung an. Wird vollenthärtetes Wasser mit einer Ausgangshärte von 30°d und 40°d eingesetzt, muss dem Wasser mehr Härte hinzugefügt werden, um die Verblockung der Maschine zu vermeiden. Die Ergebnisse zeigen, dass durch den Einsatz des Verfahrens die Verblockung der Kaffeemaschine vermieden werden kann, wie in Fig. 1 gezeigt ist.

Bei Kaffeemaschinen mit Festwasseranschluss oder Kaffeemaschinen mit einem Wassertank kann zum Härteeintrag ins vollenthärtete Wasser eine Dosierpumpe verwendet werden, welche eine wässrige Lösung definierter Wasserhärte ins Wasser dosiert. Eine weitere Möglichkeit besteht darin, in eine Kartusche Kalkstein oder Dolomit als Feststoff einzufüllen, einen Teilstrom des vollenthärteten Wassers über den Feststoff zu leiten, so dass Calcium-Ionen und Magnesium-Ionen gelöst werden und eine definierte Wasserhärte im Gesamtwasser erzielt wird.

Alternativ kann in den Wassertank 1 einer Kaffeemaschine 2, welcher vollenthärtetes Wasser enthält, oder vor einer Kaffeemaschine eine Vorrichtung, mit einer Kartusche 3, die einen Beutel 4, welcher eine wässrige Lösung definierter Wasserhärte aufweist, eingebaut werden. Aus dem Beutel wird ein definiertes Volumen der wässrigen Lösung über eine Kapillare 5, die mittels eines Rückschlagventils 6 verschlossen wird, entnommen. Die Entnahme erfolgt unter Unterdruck beim Bezug von Wasser durch die Pumpe 7 der Maschine, welche die Brühgruppe 10 oder die Kaffeekapsel mit Wasser versorgt. Calcium- und/oder Magnesium-Ionen bzw. Wasserhärte wird bei diesem Vorgang ins vollenthärtete Wasser dosiert. Das mit Wasserhärte versetzte Wasser wird mittels Pumpe 7 zur Brühgruppe 10, dem Siebträger oder dem Kaffeefilter 8 gefördert und der Kaffee 9 extrahiert.

Die Kapillare kann aus Kunststoff umfassen, beispielsweise PEEK. Bei einer anderen Ausführungsform kann die Kapillare Metall umfassen, beispielsweise Edelstahl. Die Länge der Kapillare kann zwischen etwa 5 mm bis etwa 40 mm betragen. Der Innendurchmesser der Kapillare zwischen etwa 0,1 mm bis etwa 1,5 mm betragen. Die Kapillare ist vorzugsweise senkrecht zur Strömungsrichtung des Wassers angeordnet, in das die Calcium- und Magnesium-Ionen dosiert werden.

Der Beutel ist nachrüstbar und kann in eine beliebige bestehende Kaffeemaschine und/oder Teemaschine angeordnet werden. Bei einer Ausführungsform kann der Lösungsbehälter an einen Adapter im Tank der Kaffeemaschine und/oder Teemaschine angeschlossen werden.

Die Hülle kann ein Ballon oder ein dünner Beutel sein, die beispielsweise aus Polyurethan hergestellt sind.

Eine Ausführungsform der Kartusche sieht einen faltbaren Beutel vor, der beispielsweise aus Polyethylen hergestellt ist und die wasserhärtehaltige wässrige Lösung in seinem Inneren umfasst. Der faltbare Beutel faltet sich mit abnehmendem Flüssigkeitsvolumen zusammen. Er ist über eine Kapillare mit dem Wasserstrom verbunden. Zieht die Pumpe Wasser, so öffnet sich ein Rückschlagventil und über eine Kapillare wird Wasserhärte in Form von Calcium-Ionen und/oder Magnesium-Ionen ins vollenthärte Wasser dosiert.

Die Erfindung betrifft zusammenfassend ein Verfahren und eine Vorrichtung zur Verhinderung der Verblockung der Brühgruppe, des Siebträgers oder des Kaffeefilters 8 in Kaffeemaschinen beim Einsatz von vollenthärtetem Wasser zur Zubereitung von Kaffee. Erfindungsgemäß wird vorgeschlagen, die Verblockung der Maschine zu vermeiden, indem ins vollenthärtete Wasser Calcium- und Magnesium-Ionen dosiert werden. Dies wird erfindungsgemäß dadurch gelöst, dass eine Vorrichtung mit einem Beutel oder Vorratsbehälter 4, welcher die Calcium- und Magnesium-Ionen-haltige Lösung enthält, in einer Kartusche 3 angeordnet wird, die in den Wassertank der Kaffeemaschine montiert wird. Der Beutel ist über eine Kapillare 5, die mit einem Rückschlagventil 6 verschlossen wird, mit dem vollenthärteten Wasser in Kontakt bzw. Fluidverbindung.

## Patentansprüche

1. Lösungsbehälter (3), der dazu ausgebildet ist, in einem Wasserbehälter eines Haushaltsgerätes (2) oder in einem Wasserbehälter einer Zuleitung zu dem Wasserbehälter (1) angeordnet zu werden, aufweisend:
- eine Hülle (4);
- eine wässrige Lösung, die in der Hülle (4) angeordnet ist und die Erdalkali-Ionen aufweist;
- eine Dosiereinrichtung (5), die dazu ausgebildet ist, mit der wässrigen Lösung in der Hülle (4) und dem Wasser im Wasserbehälter (3) in Fluidverbindung zu stehen und die wässrige Lösung in den Wasserbehälter abzugeben.

2. Lösungsbehälter (3) nach Anspruch 1, wobei die Erdalkali-Ionen Calcium-Ionen und/oder Magnesium-Ionen sind.

3. Lösungsbehälter (3) nach Anspruch 1 oder 2, wobei die Dosiereinrichtung eine Kapillare (5) ist.

4. Lösungsbehälter (3) nach einem der Ansprüche 1 bis 3, wobei die Hülle dazu ausgebildet ist, das von der Hülle (4) umfasste Volumen zu verändern.

5. Lösungsbehälter (3) nach einem Ansprüche 1 bis 4, wobei die Hülle (4) ein elastisches Material aufweist und ihr Volumen aufgrund der Druckdifferenz zwischen dem Inneren und dem Äußeren des Lösungsbehälters verändern kann.

6. Lösungsbehälter (3) nach einem der Ansprüche 1 bis 5, wobei die Hülle (4) ihre Form und ihr Volumen aufgrund der Druckdifferenz zwischen dem Inneren und dem Äußeren des Lösungsbehälters verändern kann.

7. Lösungsbehälter (3) nach einem der Ansprüche 1 bis 6, ferner aufweisend ein Ventil (6), das in Fluidverbindung mit der wässrigen Lösung in der Hülle (4) angeordnet ist und das dazu ausgebildet ist, die wässrige Lösung in das Wasser im Wasserbehälter (1) abzugeben und das Eintreten von Wasser aus dem Wasserbehälter (1) in die Hülle (4) zu verhindern.

8. Verfahren zum Zuführen von Wasser zu einer Kaffeemaschine (2) und/oder einer Teemaschine, aufweisend die folgenden Schritte:
- Zuführen von vollenthärtetem Wasser von einer Enthärtungseinrichtung in Richtung der Kaffeemaschine (2) und/oder der Teemaschine;
- Brühen des zugeführten Wassers in der Kaffeemaschine und/oder der Teemaschine;
**gekennzeichnet durch**
- Zuführen von Erdalkali-Ionen zum vollenthärteten Wasser vor dem Schritt des Brühens des zugeführten Wassers.

9. Verfahren nach Anspruch 8, wobei der Schritt des Zuführen von Erdalkalilonien die Erdalkali-Ionien so in das vollenthärtete Wasser dosiert, dass das zugeführte Wasser eine Härte in einem Bereich von etwa 4°d bis etwa 8°h, vorzugsweise von etwa 2°d bis etwa 14°d aufweist.

10. Verfahren nach Anspruch 8 oder 9, wobei der Schritt des Zuführens von Erdalkali-Ionien zumindest einen der folgenden Schritte aufweist:
- Zuführen einer wässrigen Lösung mit Erdalkali-Ionien;
- Zuführen der Erdalkali-Ionien mittels eines Feststoffes; und/oder
- Zuführen der Erdalkali-Ionien mittels zumindest eines Salzes.

11. Verfahren nach einem der Ansprüche 8 bis 10, wobei der Schritt des Zuführens von Erdalkali-Ionien zumindest einen der folgenden Schritte aufweist:
- Zuführen der Erdalkali-Ionien mittels einer Dosiereinrichtung;
- Leiten von Wasser in einen Behälter, in dem sich Kalkstein befindet;
- Leiten von Wasser in einen Behälter, in dem sich Dolomit befindet.

12. Verfahren nach einem der Ansprüche 8 bis 11, wobei die Erdalkali-Ionien mittels einer Kapillare (5) zugeführt werden.

13. Verfahren nach einem der Ansprüche 8 bis 12, wobei der Schritt des Zuführen von Erdalkali-Ionien zumindest einen der folgenden Schritte aufweist:
- Zuführen der Erdalkali-Ionien dem vollenthärteten Wasser in eine Kartusche;
- Zuführen der Erdalkali-Ionien dem vollenthärteten Wasser in einen Behälter;
- Zuführen der Erdalkali-Ionien dem vollenthärtetem Wasser innerhalb der Kaffeemaschine und/oder der Teemaschine; und/oder
- Zuführen der Erdalkali-Ionien dem vollenthärtetem Wasser in eine Zuleitung der Kaffeemaschine und/oder der Teemaschine.

14. Verfahren nach einem der Ansprüche 8 bis 13, ferner aufweisend den Schritt des Anordnens des Lösungsbehälters (1) nach einem der Ansprüche 1 bis 7
- in einem Fluidbehälter in der Kaffeemaschine (2);
- in einem Fluidbehälter in der Teemaschine;
- in einem Fluidbehälter in einer Zuleitung zu der Kaffeemaschine; und/oder
- in einem Fluidbehälter in einer Zuleitung zu der Teemaschine.

15. Verfahren nach Anspruch 14, **gekennzeichnet durch** den Schritt des Erzeugens eines Unterdruckes in zumindest einem Bauteil der Kaffeemaschine (2) und/oder Teemaschine, wobei der Unterdruck eine Entnahme der wässrigen Lösung aus der Inneren der Hülle des Lösungsbehälters bewirkt.

16. Verfahren nach einem der Ansprüche 8 bis 15, wobei die Erdalkali-Ionien Calcium-Ionen und/oder Magnesium-Ionen sind.

17. Kaffeemaschine und/oder Teemaschine mit dem Lösungsbehälter (4) nach einem der Ansprüche 1 bis 7.

18. Verwenden des Lösungsbehälters (3) nach einem der Ansprüche 1 bis 7 zum Zuführen von Erdalkali-Ionen zu Wasser, das einer Brüheinrichtung einer Kaffeemaschine (2) und/oder einer Teemaschine zugeführt wird.
